# EUROPÄISCHE PATENTSCHRIFT

(11) **EP 4 275 858 B1**
(45) Veröffentlichungstag und Bekanntmachung des Hinweises auf die Patenterteilung: **18.12.2024**
(21) Anmeldenummer: 22172491.7
(22) Anmeldetag: 10.05.2022
(51) Int. Cl.: B29C 44/12, F16L 59/14

(54) **HERSTELLVERFAHREN EINES VORISOLIERTEN ROHRES**
METHOD OF MANUFACTURING A PRE-INSULATED PIPE
PROCÉDÉ DE FABRICATION D'UN TUBE PRÉ-ISOLÉ

(43) Veröffentlichungstag der Anmeldung: 15.11.2023
(73) Patentinhaber: Georg Fischer Rohrleitungssysteme AG, 8201 Schaffhausen (CH)
(72) Erfinder: Breyer, Markus, 78315 Radolfzell (DE)
(74) Vertreter: Fenner, Seraina

(56) Entgegenhaltungen:
- DE-A1- 3 338 071
- DE-C2- 3 534 241
- KR-A- 20200 112 239
- KR-B1- 101 045 835
- US-A- 4 162 093
- US-A1- 2007 074 778

## Beschreibung

Die Erfindung betrifft ein Verfahren zur Herstellung eines vorisolierten Rohres beinhaltend ein Mantelrohr aus Kunststoff, eine geschäumte Isolationsschicht und ein Medium führendes Innenrohr mit den folgenden Herstellschritten:
- Bereitstellen eines Mantelrohres aus Kunststoff,
- Anbringen von Abstandshaltern am Mantelrohr, um die konzentrische Anordnung des Mantelrohres und des Innenrohres zu gewährleisten,
- Sichern der Abstandshalter am Mantelrohr,
- Einführen des Innenrohres in das Mantelrohr, wobei das Innenrohr durch die Abstandshalter konzentrisch zum Mantelrohr geführt wird,
- Ausschäumen des Zwischenraums zwischen Mantel- und Innenrohr, wodurch die Isolationsschicht gebildet wird.

Herstellverfahren von vorisolierten Rohren sind bekannt und bringen die Schwierigkeit mit sich das innenliegende Mediumsrohr und das aussenliegende Mantelrohr über die komplette Länge konzentrisch zueinander anzuordnen. Zudem werden bei grösseren Dimensionen meist Abstandshalter zwischen dem Innen- und Aussenrohr eingesetzt, die dann zwischen den Rohren verbleiben um die konzentrische Anordnung zu vermeiden. Nachteilig ist dabei, dass dadurch Wärmebrücken gebildet werden, über die ein ungewollter Temperaturausgleich zwischen dem Medium und der Umgebung stattfindet. Zudem ist im Falle eines Anschliessens eines Fittings meist eine Abisolation des Innenrohres erforderlich und wenn sich an dieser Stelle ein Abstandshalter befindet, bedeutet das ein hoher Mehraufwand für das Schälen und Trennen des Rohres.

Die KR20200112239 A offenbart ein doppelisoliertes Rohr, wobei die Rohre über Abstandselemente zueinander konzentrisch angeordnet sind. Nachteilig ist hierbei, wie bereits erwähnt, dass ein Wärmeaustausch zwischen dem im Innenrohr transportierten Medium und der Umgebung erfolgt, das heisst also, dass die Abstandselemente Wärmebrücken bilden und die Isolation nur bedingt funktioniert.

Es ist Aufgabe der Erfindung ein Verfahren vorzuschlagen, das eine konzentrische Anordnung des Mantel- und Innenrohres erlaubt und keine unerwünschten Wärmebrücken zwischen den beiden Rohren gebildet werden.

Diese Aufgabe wird erfindungsgemäss dadurch gelöst, dass die Abstandshalter nach dem Schäumen entfernt werden.

Das erfindungsgemässe Verfahren zur Herstellung eines vorisolierten Rohres beinhaltend ein Mantelrohr aus Kunststoff, eine geschäumte Isolationsschicht und ein Medium führendes Innenrohr, vorzugsweise aus Kunststoff mit den folgenden Herstellschritten:
- Bereitstellen eines Mantelrohres aus Kunststoff,
- Anbringen von Abstandshaltern am Mantelrohr, um die konzentrische Anordnung des Mantelrohres und des Innenrohres zu gewährleisten,
- Sichern der Abstandshalter am Mantelrohr
- Einführen des Innenrohres in das Mantelrohr, wobei das Innenrohr durch die Abstandshalter konzentrisch zum Mantelrohr geführt wird,
- Ausschäumen des Zwischenraums zwischen Mantel- und Innenrohr, wodurch die Isolationsschicht gebildet wird,
wobei die Abstandshalter nach dem Schäumen entfernt werden.

Die Abstandshalter werden vorzugweise von aussen in das Mantelrohr getrieben. Dies kann durch Bohren von Löchern und anschliessendem Hineinstecken der Abstandshalter erfolgen oder auch direkt in einem Schritt, wie auch durch ein Hineintreiben, Hineindrücken oder -pressen der Abstandshalter ist denkbar. Dies ist abhängig vom Material des Mantelrohres und dessen Wandstärke, wie auch vom Material des Abstandshalters und seiner Ausgestaltung. Selbstverständlich können diese Schritte manuell wie auch automatisiert ablaufen.

Eine bevorzugte Ausführungsform besteht darin, dass der Abstandshalter durch einen Pin und ein daran angeordnetes Kreissegment gebildet wird. Der Abstandshalter wird mit dem Pin in die Mantelfläche des Mantelrohres hineingetrieben bzw. gebohrt oder durch eine vorbereitete Bohrung gesteckt, so dass der Pin in Richtung Zentrum ragt. Der Innendurchmesser des Kreissegments entspricht vorzugsweise dem Aussendurchmesser des Mantelrohres, wodurch das Kreissegment formschlüssig am Aussendurchmesser des Mantelrohres anliegt. Durch den ins Zentrum ragenden Pin und das optimal am Aussenumfang des Mantelrohres anliegende Kreissegment dient der Abstandshalter der Zentrierung des Innenrohres.

Als bevorzugte Ausführungsform hat sich gezeigt, wenn mehrere Abstandshalter regelmässig am Umfang des Mantelrohres platziert werden. Vorzugsweise werden dazu mindestens drei Abstandshalter auf derselben Höhe am Rohr am Umfang platziert, wobei die Abstandshalter regelmässig am Umfang verteilt sind. Speziell bevorzugt sind vier am Mantelrohr auf einer Höhe angeordnete Abstandshalter die jeweils 90° zueinander versetzt sind. Dadurch wird das Innenrohr genau in der Mitte des Mantelrohrs positioniert.

Es ist vorteilhaft, wenn die regelmässig am Umfang angeordneten Abstandshalter jeweils mit denselben Abständen über die Rohrlänge angeordnet werden und dadurch Lagerpunkte für das Innenrohr bilden. An diesen Lagerpunkten sind die Abstandshalter dann jeweils entlang des Umfangs des Rohres angeordnet.

Als bevorzugte Ausführungsform hat sich gezeigt, wenn mindestens drei Abstandshalter am Umfang des Mantelrohres an einem Lagerpunkt platziert werden, vorzugsweise werden vier Abstandshalter an einem Lagerpunkt angeordnet.

Vorzugsweise erfolgt das Sichern der Abstandshalter mit einem über die Abstandshalter anbringbaren Spannring, wodurch ein Herausfallen oder Entfernen der Abstandshalter unterbunden wird. Der Spannring weist vorzugsweise eine Trennstelle auf, durch die der Spannring während dem Anbringen um die am Rohr platzierten Abstandshalter geweitet werden kann und dann die Sicherung der Abstandshalter bildet. Der Spannring liegt dann am Aussendurchmesser der Abstandshalter bzw. der Kreissegmente an und umschliesst diese.

Anschliessend wird das Innenrohr in das Mantelrohr eingeführt und durch die Abstandshalter konzentrisch zum Mantelrohr angeordnet. Durch die regelmässigen Lagerpunkte entlang des Rohres an denen die Abstandshalter angeordnet sind wird das Innenrohr konstant zentriert und gestützt. Danach kann der Zwischenraum zwischen Innenrohr und Mantelrohr mit einem Kunststoff ausgeschäumt werden. Der geschäumte Kunststoff bildet dann die Isolationsschicht im Rohr.

Als bevorzugte Ausführungsform hat sich gezeigt, wenn zum Entfernen der Abstandshalter der Spannring vorab entfernt wird. Dadurch wird die Sicherung entfernt und die Abstandshalter können aus dem Mantelrohr herausgezogen werden. Die Pins haben in der Isolationsschicht Hohlräume bzw. Löcher gebildet welche vorzugsweise aufzufüllen sind.

Als bevorzugte Ausführungsform hat sich gezeigt, wenn in die durch die Abstandshalter entstandenen Hohlräume, Füllelemente, wie Dübel oder dergleichen oder eine Füllmasse eingebracht wird

Es ist vorteilhaft, wenn durch die Kreissegmente der Abstandshalter das Mantelrohr formgenau gestützt wird, dies wird dadurch erreicht, dass der Innendurchmesser des Kreissegments dem Aussendurchmesser des Mantelrohres entspricht.

Vorzugsweise wird das Innenrohr über den Pin der Abstandshalter zentriert und gestützt.

Als bevorzugte Ausführungsform hat sich gezeigt, wenn die Abstandshalter sich gegenüberliegend angeordnet werden.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: die Schritte des erfindungsgemässen Verfahrens und
- Fig. 2: die eingesetzten Elemente neben dem Innen- und Mantelrohr.

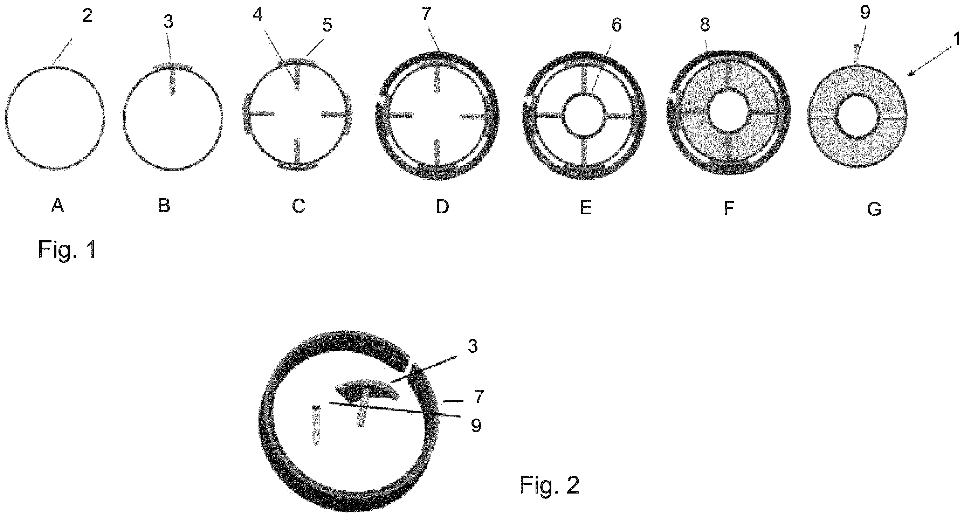

Die in Fig. 1 dargestellte Zeichnung zeigt das erfindungsgemässe Verfahren mit den einzelnen Schritten an eine Querschnittsposition des Rohres. Unter A wird das Mantelrohr 2 aus Kunststoff bereitgestellt. Anschliessend werden die Abstandshalter 3 am Aussenumfang des Mantelrohres platziert siehe Schritt B. Vorzugsweise werden vier Abstandshalter 3 regelmässig am Aussendurchmesser des Mantelrohres 2 angeordnet. Gut ersichtlich ist der Pin 4 und das Kreissegment 5 der einzelnen Abstandshalter 3. Wobei zu erkennen ist, dass der Innendurchmesser des Kreissegments 5 formschlüssig am Aussendurchmesser des Mantelrohres 2 anliegt. Dadurch wird gewährleistet, dass die Abstandshalter 3 am Aussendurchmesser anliegen und dadurch mittels des Pins 4 der Abstand für das Innenrohr 6 genau definiert ist und eine konzentrische Anordnung der Rohre 2, 6 gewährleistet ist. Anschliessend werden die Abstandshalter 3 am Mantelrohr 2 gesichert. Dies erfolgt vorzugsweise über einen Spannring 7 der um die Abstandshalter 3 angeordnet wird. In Fig. 2 sind einzelne Elemente des Verfahrens ersichtlich, wie auch der Spannring 7. Gut erkennbar ist die Trennstelle, die dazu dient, dass man den Spannring 7 bei der Montage über die Abstandshalter bringen kann und dieser dann eng am Aussendurchmesser der Abstandshalter anliegt. Dadurch wird eine radiale Verschiebung der Abstandshalter 3 unterbunden. Als weiterer Schritt folgt dann das Einführen des Innenrohres 6 unter Schritt E. Gut ersichtlich ist die konzentrische Anordnung des Innen- und Mantelrohres 2, 6 aussen sowie die Abstandshalter 3 die dies ermöglichen. Unter Schritt F ist dann ersichtlich, dass der Hohlraum zwischen Innen- und Mantelrohr 2, 6 mit einem Kunststoffmaterial ausgeschäumt wurde, dass dann die Isolationsschicht 8 bildet. In Schritt G würden der Spannring 7 sowie die Abstandshalter 3 bereits vom vorisolierten Rohr entfernt. Um die durch die Pins 4 entstandenen Hohlräume auszufüllen, wird darin vorzugsweise ein Füllelement 9 oder Füllmasse eingebracht. Die Schritte zeigen jeweils einen Querschnitt durch einen Lagerpunkt, wobei ein vorisoliertes Rohr das mittels des erfindungsgemässen Verfahrens hergestellt wird, weist mehrere solcher Lagerpunkte auf, damit das Innenrohr 6 gut gestützt wird und gerade verläuft. Die Fig. 2 zeigt neben dem Spannring 7 noch einen Abstandshalter 3 sowie einen Dübel der beispielsweise als Füllelement 9 eingesetzt werden kann.

### Bezugszeichenliste

- 1: Isoliertes Rohr
- 2: Mantelrohr
- 3: Abstandhalter
- 4: Pin
- 5: Kreissegment
- 6: Innenrohr
- 7: Spannring
- 8: Isolationsschicht
- 9: Füllelement

## Patentansprüche

1. Verfahren zur Herstellung eines vorisolierten Rohres (1) beinhaltend ein Mantelrohr (2) aus Kunststoff, eine geschäumte Isolationsschicht (8) und ein Medium führendes Innenrohr (6) mit den folgenden Herstellschritten:
• Bereitstellen eines Mantelrohres (2) aus Kunststoff,
• Anbringen von Abstandshaltern (3) am Mantelrohr (2), um die konzentrische Anordnung des Mantelrohres (2) und des Innenrohres (6) zu gewährleisten,
• Sichern der Abstandshalter (3) am Mantelrohr (2),
• Einführen des Innenrohres (6) in das Mantelrohr (2), wobei das Innenrohr (6) durch die Abstandshalter (3) konzentrisch zum Mantelrohr (2) geführt wird,
• Ausschäumen des Zwischenraums zwischen Mantel- und Innenrohr (2, 6), wodurch die Isolationsschicht (8) gebildet wird,
**dadurch gekennzeichnet, dass** die Abstandshalter (3) nach dem Ausschäumen entfernt werden.

2. Verfahren nach Anspruch 1, **dadurch gekennzeichnet, dass** der Abstandshalter (3) durch einen Pin (4) und ein daran angeordnetes Kreissegment (5) gebildet wird.

3. Verfahren nach einem der Ansprüche 1 oder 2, **dadurch gekennzeichnet, dass** mehrere Abstandshalter (3) regelmässig am Umfang des Mantelrohres (2) platziert werden.

4. Verfahren nach einem der Ansprüche 1 bis 3, **dadurch gekennzeichnet, dass** die regelmässig am Umfang angeordneten Abstandshalter (3) jeweils mit denselben Abständen über die Rohrlänge angeordnet werden und dadurch Lagerpunkte für das Innenrohr (6) bilden.

5. Verfahren nach einem der Ansprüche 1 bis 4, **dadurch gekennzeichnet, dass** mindestens drei Abstandshalter (3) am Umfang des Mantelrohres (2) an einem Lagerpunkt platziert werden, vorzugsweise werden vier Abstandshalter (3) an einem Lagerpunkt angeordnet.

6. Verfahren nach einem der Ansprüche 1 bis 5, **dadurch gekennzeichnet, dass** das Sichern der Abstandshalter (3) mit einem über die Abstandshalter (3) bringbaren Spannring (7) erfolgt, wodurch ein Herausfallen oder Entfernen der Abstandshalter (3) unterbunden wird.

7. Verfahren nach einem der Ansprüche 1 bis 6, **dadurch gekennzeichnet, dass** zum Entfernen der Abstandshalter (3) die Spannringe (7) vorab entfernt werden.

8. Verfahren nach einem der Ansprüche 1 bis 7, **dadurch gekennzeichnet, dass** in die, durch die Abstandshalter (3) entstandenen Hohlräume in der Isolationsschicht (8), Füllelemente (9) oder Füllmasse eingebracht wird.

9. Verfahren nach einem der Ansprüche 1 bis 8, **dadurch gekennzeichnet, dass** durch Kreissegmente (5) der Abstandshalter (3) das Mantelrohr (2) formgenau gestützt wird.

10. Verfahren nach einem der Ansprüche 1 bis 9, **dadurch gekennzeichnet, dass** das Innenrohr (6) mit den Pins (4) der Abstandshalter (3) zentriert und gestützt wird.

11. Verfahren nach einem der Ansprüche 1 bis 10, **dadurch gekennzeichnet, dass** die Abstandshalter (3) sich gegenüberliegend angeordnet werden.

12. Verfahren nach einem der Ansprüche 1 bis 11, **dadurch gekennzeichnet, dass** das Innenrohr (6) aus Kunststoff ist.

13. Vorisoliertes Rohr (1) hergestellt nach dem Verfahren nach einem der Ansprüche 1 bis 12.

## Claims

1. Method of manufacturing a pre-insulated pipe (1) containing a covering pipe (2) made of plastics material, a foamed insulation layer (8) and an inner pipe (6) which carries a medium, having the following manufacturing steps:
• providing a covering pipe (2) made of plastics material,
• fitting spacers (3) on the covering pipe (2) in order to ensure the concentric arrangement of the covering pipe (2) and the inner pipe (6),
• securing the spacers (3) to the covering pipe (2),
• introducing the inner pipe (6) into the covering pipe (2), wherein the inner pipe (6) is guided by the spacers (3) concentrically with respect to the covering pipe (2),
• foaming the intermediate space between the covering pipe and inner pipe (2, 6), whereby the insulation layer (8) is formed,
**characterized in that** the spacers (3) are removed after the foaming.

2. Method according to Claim 1, **characterized in that** the spacer (3) is formed by means of a pin (4) and a circle segment (5) which is arranged thereon.

3. Method according to either Claim 1 or Claim 2, **characterized in that** a plurality of spacers (3) are placed regularly on the circumference of the covering pipe (2).

4. Method according to any one of Claims 1 to 3, **characterized in that** the spacers (3) which are arranged regularly on the circumference are in each case arranged with the same spacings over the pipe length and thereby form bearing locations for the inner pipe (6).

5. Method according to any one of Claims 1 to 4, **characterized in that** at least three spacers (3) are placed on the circumference of the covering pipe (2) at one bearing location, preferably four spacers (3) are arranged at one bearing location.

6. Method according to any one of Claims 1 to 5, **characterized in that** the securing of the spacers (3) is carried out with a clamping ring (7) which can be moved over the spacers (3), whereby the spacers (3) are prevented from being removed or falling out.

7. Method according to any one of Claims 1 to 6, **characterized in that**, in order to remove the spacers (3), the clamping rings (7) are removed beforehand.

8. Method according to any one of Claims 1 to 7, **characterized in that** filling elements (9) or filling mass is/are introduced into the hollow spaces which are produced by the spacers (3) in the insulation layer (8).

9. Method according to any one of Claims 1 to 8, **characterized in that** the covering pipe (2) is supported in a dimensionally precise manner by circle segments (5) of the spacers (3).

10. Method according to any one of Claims 1 to 9, **characterized in that** the inner pipe (6) is centred and supported with the pins (4) of the spacers (3).

11. Method according to any one of Claims 1 to 10, **characterized in that** the spacers (3) are arranged opposite each other.

12. Method according to any one of Claims 1 to 11, **characterized in that** the inner pipe (6) is made of plastics material.

13. Pre-insulated pipe (1) manufactured according to the method according to any one of Claims 1 to 12.

## Revendications

1. Procédé de fabrication d'un tube pré-isolé (1) comprenant un tube d'enveloppe (2) en matière plastique, une couche d'isolation en mousse (8) et un tube interne (6) conduisant le fluide, comprenant les étapes de fabrication suivantes :
• préparation d'un tube d'enveloppe (2) en matière plastique,
• mise en place d'entretoises (3) sur le tube d'enveloppe (2) afin de garantir la disposition concentrique du tube d'enveloppe (2) et du tube interne (6),
• fixation des entretoises (3) sur le tube d'enveloppe (2),
• introduction du tube interne (6) dans le tube d'enveloppe (2), le tube interne (6) étant guidé par les entretoises (3) de manière concentrique par rapport au tube d'enveloppe (2),
• remplissage par de la mousse de l'espace intermédiaire entre le tube d'enveloppe et le tube interne (2, 6), ce qui permet de former la couche d'isolation (8),
**caractérisé en ce que** les entretoises (3) sont retirées après le moussage.

2. Procédé selon la revendication 1, **caractérisé en ce que** l'entretoise (3) est formée par un pion (4) et un segment de cercle (5) agencé sur celui-ci.

3. Procédé selon l'une des revendications 1 ou 2, **caractérisé en ce que** plusieurs entretoises (3) sont placées régulièrement sur la périphérie du tube d'enveloppe (2).

4. Procédé selon l'une des revendications 1 à 3, **caractérisé en ce que** les entretoises (3) disposées régulièrement sur la périphérie sont respectivement disposées avec les mêmes distances sur la longueur du tube et forment ainsi des points d'appui pour le tube interne (6).

5. Procédé selon l'une des revendications 1 à 4, **caractérisé en ce qu'**au moins trois entretoises (3) sont placées à la périphérie du tube d'enveloppe (2) en un point d'appui, de préférence quatre entretoises (3) sont placées en un point d'appui.

6. Procédé selon l'une des revendications 1 à 5, **caractérisé en ce que** le blocage des entretoises (3) s'effectue au moyen d'une bague de serrage (7) apte à être amenée au-dessus des entretoises (3), ce qui empêche les entretoises (3) de tomber ou d'être enlevées.

7. Procédé selon l'une des revendications 1 à 6, **caractérisé en ce que** pour retirer les entretoises (3), les bagues de serrage (7) sont préalablement retirées.

8. Procédé selon l'une des revendications 1 à 7, **caractérisé en ce que** des éléments de remplissage (9) ou une masse de remplissage sont introduits dans les espaces vides créés par les entretoises (3) dans la couche d'isolation (8).

9. Procédé selon l'une des revendications 1 à 8, **caractérisé en ce que** le tube d'enveloppe (2) est soutenu avec une forme précise par des segments de cercle (5) des entretoises (3).

10. Procédé selon l'une des revendications 1 à 9, **caractérisé en ce que** le tube interne (6) est centré et soutenu par les pions (4) des entretoises (3).

11. Procédé selon l'une des revendications 1 à 10, **caractérisé en ce que** les entretoises (3) sont disposées en vis-à-vis.

12. Procédé selon l'une des revendications 1 à 11, **caractérisé en ce que** le tube interne (6) est en matière plastique.

13. Tube pré-isolé (1) fabriqué par le procédé selon l'une des revendications 1 à 12.
